Europäisches Patentamt

European Patent Office

Office européen des brevets

(11) Publication number: **0 150 622**
A2

(12) # EUROPEAN PATENT APPLICATION

(21) Application number: 84309088.7

(22) Date of filing: 27.12.84

(51) Int. Cl.⁴: **G 01 N 27/82**, G 01 N 3/06

(30) Priority: 11.01.84 GB 8400638

(43) Date of publication of application: 07.08.85
Bulletin 85/32

(84) Designated Contracting States: DE FR NL

(71) Applicant: DYNALOG ELECTRONICS LIMITED,
25 Somerset Street, Kingsdown Bristol, BS2 8LZ (GB)

(72) Inventor: Edwards, John Islwyn, 25 Somerset Street,
Bristol BS2 8LZ (GB)
Inventor: Barnes, Peter Robert, 5 Cambrian Drive, Yate
Bristol (GB)

(74) Representative: Stuart, Ian Alexander et al, MEWBURN
ELLIS & CO. 2/3 Cursitor Street, London EC4A 1BQ (GB)

(54) Electromagnetic monitoring of elongate conductors, particularly pipes or cables.

(57) Method and apparatus for electromagnetic monitoring of elongate conductors, particularly for assessing the condition of pipes or cables that extend partly beneath the sea. An AC signal is applied (14, 16) to the conductor 10, and transducers 18, 20 at spaced regions receive induced signals which are compared (22) to provide an output indicative of signal leakage from the conductor 10. An induced signal may also be compared (26) with a preset standard 30.

-1-

ELECTROMAGNETIC MONITORING OF ELONGATE CONDUCTORS,

PARTICULARLY PIPES OR CABLES

This invention relates to electromagnetic monitoring of elongate conductors such as pipes and cables. It is especially but not exclusively applicable to monitoring the condition of a pipe arranged to bring a subsea product such as oil or gas from below the sea surface to above the sea surface.

The exteriors of such pipes are normally wrapped to protect them from corrosion caused by exposure to the sea and air. However, it is possible for the wrap to become damaged, particularly near sea level, and it is desirable to detect this as soon as possible so that repairs can be effected before the pipe itself starts to corrode. Should this be unsuccessful, it is desirable to detect any resulting corrosion. It is also desirable to be able to detect internal corrosion occurring from within the pipe, e.g. as a result of pipe contents. The present invention seeks to provide methods and apparatus which address one or more of these problems. It will be appreciated that similar problems may arise in the case of cables which are similarly partially submerged, and the present invention may also be applied to monitoring such cables.

According to one aspect of the invention, there is provided a method of monitoring an elongate conductor comprising applying an alternating signal current to the conductor; picking up from a first region of the

-2-

conductor a first signal caused by the signal current, by means of a first assembly comprising at least one electromagnetic transducer; picking up from a second region of the conductor longitudinally spaced from said first region a second signal caused by the signal current, by means of a second assembly comprising at least one electromagnetic transducer; and comparing the first and second signals. If the conductor is properly insulated, e.g. if it is a pipe whose wrap is in good condition, then no substantial loss of the signal current will occur through it, and so the first and second signals, representing the signal current at said two regions, should be substantially equal. Preferably one said region is above sea level and the other below sea level. Thus signal current is compared where damage is most likely. However a series of said transducer assemblies could be attached along the conductor so that changes in signal current can be monitored wherever they occur.

The signal current may conveniently be applied to the conductor inductively. The conductor is preferably monitored over a period of time, e.g. by periodically passing a pulse or burst of the signal current, and averaging the results of the comparison step of the method for each pulse over a longer period.

According to a second aspect of the invention, there is also provided apparatus arranged for performing

-3-

the above method.

An embodiment of the invention will now be described by way of example, with reference to the accompanying, highly schematic diagrammatic drawing of the general arrangement of the embodiment.

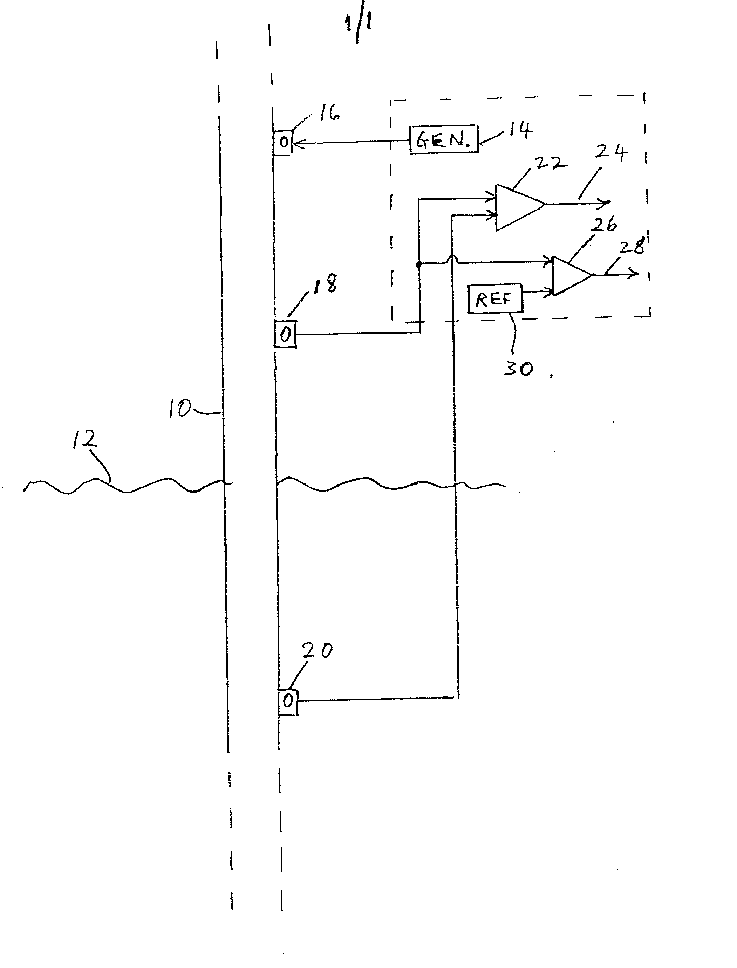

The drawing shows a pipe 10 which passes from below the sea level 12 to above it, and which may for example be used for delivery of oil from beneath the sea bed. The pipe 10 is of conventional construction, with an insulating, corrosion preventing wrap. A signal generator 14 produces a signal which is applied to an electromagnetic transducer 16, which is arranged in relation to the pipe so as to induce a signal current in it. Alternatively, if it were convenient, it would be possible to apply the signal current directly to the pipe. The signal generator is "earthed" to the sea itself, so the signal current induced in the pipe flows along the pipe until it reaches some earthed point at its lower end. If the pipe wrap is in good condition it will do so without loss.

However, such pipe wraps are susceptible to damage, particularly in the general vicinity of the sea level (bearing in mind that this level will vary, with tides, etc.). To monitor for such damage, two or more electromagnetic transducer assemblies are provided (of which two 18,20 are shown) at desired positions along the pipe, depending on the length of the pipe which is to be monitored. At least one assembly is above and at

-4-

least one assembly is below the sea level. The signal current induces a corresponding signal voltage in these transducer assemblies 18,20. These induced signals are processed by circuits which are not shown, in order to eliminate noise and interference and produce signals which are indicative of the level of the current in the pipe 10 at the respective positions corresponding to the transducer assemblies 18,20. They are then taken to a comparator 22, the output 24 of which indicates whether or not the signals are substantially equal. If the pipe wrap is in good condition, they will be. If on the other hand signal current is being lost from the pipe 10 to the sea as a result of damage to the pipe wrap and possibly consequential corrosion in the pipe, the signal from the transducer assembly 20 will be less than that of the transducer assembly 18, and the output 24 of the comparator 22 will indicate this.

If the pipe wrap is damaged near sea level, the level of the sea at any given time will have an effect on the difference which is observed between the two signals. For reliable continuous monitoring, it is best to average the results from the comparator 22 over a period of time, say one hour. Suitably, the generator 14 is operated in short pulses or bursts, say one per minute, and the output 24 of the comparator 22 measured and stored during each pulse or burst. It is then easy to average the results thus obtained over one hour, or over any other desired period, e.g. one day. Of course,

-5-

to achieve this automatically, suitable control circuitry will be required, and a microprocessor based control unit to control the operation and process the results is easily devised.

It is also possible to monitor for internal corrosion in the pipe, e.g. due to its contents. Such corrosion will not result in current losses from the pipe, and so will not be detected by the comparator 22. However, such corrosion will affect the overall level of signal current flowing in the pipe.

Accordingly, the processed signal from one of the transducer assemblies is taken to a second comparator 26. In the drawing, the signal from the transducer assembly 18 is taken, but it does not much matter which transducer assembly is used. The comparator 26 compares this signal with a reference level generated by a circuit 30. This reference level is preset e.g. when the apparatus is installed, to correspond with the level of signal current produced in the pipe at that time by the generator 14 (which should have an appropriately stable output). As long as there is subsequently no appreciable change in the internal corrosion, therefore, the output 28 of the comparator 26 will indicate that its inputs are substantially equal. Should there be any appreciable internal corrosion as time goes on, however, the output of transducer assembly 18 will become lower than the reference and the output 28 will indicate this.

This monitoring for changes in internal corrosion

-6-

is easily carried out in a similar manner and at the same time as the monitoring for pipe wrap damage, suitably by the same microprocessor based control unit.

The transducers 16,18,20 may be of any suitable type, e.g. air-cored or ferrite-cored coils, or (for the transducers 18,20 at least) Hall-effect devices.

Although reference has been made above to wrapped pipes, it will be appreciated that the invention is also applicable to coated pipes.

-7-

CLAIMS:

1.    A method of monitoring an elongate conductor comprising applying (14,16) an alternating signal current to the conductor (10); picking up from a first region of the conductor a first signal caused by the signal current, by means of a first assembly (18) comprising at least one electromagnetic transducer; picking up from a second region of the conductor longitudinally spaced from said first region a second signal caused by the signal current, by means of a second assembly (20) comprising at least one electromagnetic transducer; and comparing (22) the first and second signals.

2.    A method according to claim 1 wherein the conductor (10) extends from above sea level (12) to below sea level, comprising the step of selecting said first region above sea level and said second region below sea level.

3.    A method according to claim 1 or 2 wherein the signal current is applied to the conductor inductively.

4.    A method according to any preceding claim wherein the signal current is applied in pulses, and the results of comparing said first and second signals caused by a plurality of pulses are averaged.

5.    A method according to any preceding claim including the further step of providing a reference signal level (30) corresponding with the signal current in the conductor at a reference time; and subsequently comparing (26) the reference signal level with the signal from one of the transducer assemblies (18) to provide information about the condition of the conductor.

6.    Apparatus for monitoring an elongate conductor (10) comprising:

means (14,16) for applying an alternating signal current to the conductor (10);

first and second transducer assemblies (18,20) each comprising at least one electromagnetic transducer for picking up respective ones of first and second signals from respective longitudinally spaced regions of the conductor; and

signal processing means (22) coupled to the transducer assemblies (18,20) to receive said signals, and operable to compare said signals to provide an output (24) related to the difference between them.

7.    Apparatus according to claim 6 wherein said means (14,16) for applying a signal comprises a signal generator (14) coupled to a transducer (16) arranged to be inductively coupled to the conductor (10).

8.    Apparatus according to claim 6 or 7 wherein said means (14,16) for applying a signal is operable to apply a pulsed signal, and said signal processing means (22) includes time averaging means arranged to average the results of comparing  said first and second signals over a plurality of pulses.

9.    Apparatus according to claim 6,7 or 8 further including means (30) for providing a reference signal level, and wherein said signal processing means includes means (26) for comparing this reference signal level with one of said first and second signals.

10.    An insulated elongate conductor assembly for extending partly beneath the sea, comprising an insulated elongate conductor (10) and an apparatus according to any of claims 6 to 9, wherein the first and second transducer assemblies (18,20) are mounted on the insulated conductor at respective longitudinal regions which are intended to be, respectively, above and below the level of the sea (12).

0150622